**Europäisches Patentamt**

**European Patent Office**

**Office européen des brevets**

(19)

(11) Veröffentlichungsnummer : **0 551 537 B1**

(12)

# EUROPÄISCHE PATENTSCHRIFT

(45) Veröffentlichungstag der Patentschrift :
**22.03.95 Patentblatt 95/12**

(21) Anmeldenummer : **92100460.2**

(22) Anmeldetag : **13.01.92**

(51) Int. Cl.⁶ : **G01C 19/72**

(43) Veröffentlichungstag der Anmeldung :
**21.07.93 Patentblatt 93/29**

(45) Bekanntmachung des Hinweises auf die
Patenterteilung :
**22.03.95 Patentblatt 95/12**

(84) Benannte Vertragsstaaten :
**CH DE ES FR GB IT LI**

(56) Entgegenhaltungen :
**EP-A- 0 436 052**
**EP-A- 0 441 998**

(54) **Verfahren und Einrichtung zur Drehratenmessung mittels eines faseroptischen Sagnac-Interferometers.**

(73) Patentinhaber : **LITEF GmbH**
**Lörracher Strasse 18**
**D-79115 Freiburg (DE)**

(72) Erfinder : **Spahlinger, Günter Dr.-Ing.**
**Hagbergstrasse 7**
**W-7000 Stuttgart 1 (DE)**

(74) Vertreter : **TER MEER - MÜLLER - STEINMEISTER & PARTNER**
**Mauerkircherstrasse 45**
**D-81679 München (DE)**

## Beschreibung

Die Erfindung betrifft ein Verfahren zur Drehratenmessung mittels eines faseroptischen Sagnac-Interferometers mit Phasenrückstellung, bei dem

- zwei aus einer Lichtquelle stammende, polarisierte und durch Strahlteilung erzeugte Lichtstrahlen in entgegengesetzten Richtungen in eine Faserspule eingestrahlt und anschließend wiedervereinigt werden,
- das dabei entstehende Interferenzbild detektiert und ein der Lichtintensität des Interferenzbildes entsprechendes elektrisches Signal erzeugt wird, und bei dem
- die beiden Lichtstrahlen durch ein aus mehreren variablen Anteilen zusammengesetztes Steuersignal moduliert werden, von denen ein erster Signalanteil ein über einen digitalen Regelprozeß erzeugtes Rückstellsignal ist, welches nichtreziproke, inkrementale Phasenverschiebungen der beiden Lichtstrahlen kompensiert und von denen ein zweiter Signalanteil, gesteuert von einem ersten Zufallszahlengenerator, jeweils für eine Zeit $T_0$, die Werte 0 oder $\pi$ annimmt, wobei $T_0$ der Laufzeit jedes der beiden Lichtstrahlen durch die Faserspule im Ruhezustand entspricht.

Gegenstand der Erfindung ist weiterhin eine Einrichtung zur Drehratenmessung mit einem phasenrückstellenden, faseroptischen Sagnac-Interferometer, bei dem

- zwei aus einer Lichtquelle stammende, mittels eines Polarisators polarisierte und durch einen Strahlteiler erzeugte Lichtstrahlen in entgegengesetzten Richtungen in eine Faserspule eingestrahlt und anschließend am Strahlteiler wiedervereinigt werden,
- das aus der Strahlvereinigung entstehende Interferenzbild durch einen Photodetektor abgetastet wird, der ein der Lichtintensität des Interferenzbildes entsprechendes Signal liefert, das einen ersten Verstärker mit nachgeschaltetem AD-Wandler beaufschlagt, dessen Ausgangswerte in einer digitalen Auswerteschaltung verarbeitet werden, die einerseits das über einen Hauptregelkreis erzeugte digitale Phasenrückstellsignal an einen DA-Wandler mit nachgeschaltetem zweiten Verstärker zur Gewinnung des den Phasenmodulator beaufschlagenden Rückstellsignals und ein drehratenproportionales Signal sowie andererseits über einen ersten Hilfsregelkreis ein erstes Stellsignal für den Verstärkungsfaktor $a_1$ des zweiten Verstärkers bereitstellt, derart, daß die Sollwertbeziehung $a_1 c_1 = 1$ erfüllt ist, wobei mit $c_1$ der elektrooptische Koppelfaktor bezeichnet ist.

Ausgangspunkt der Erfindung ist das in EP-A1-0 441 998 (Lit. [5]; vgl. beigefügte Literaturliste) beschriebene, für inertiale Drehratenmessung geeignete faseroptische Sagnac-Interferometer, kurz auch als faseroptischer Kreisel bezeichnet, bei dem durch elektromagnetische Überkopplungen verursachte Biasfehler und darauf beruhende Unempfindlichkeitsbereiche durch ein von einem Zufallszahlengenerator gesteuertes Modulationsverfahren beseitigt werden, das Korrelationsfreiheit eines Demodulator-Referenzsignals gewährleistet. Die in Lit. [5] beschriebene Lösung bedingt jedoch große schaltungstechnische Komplexität der Baugruppen zur Erzeugung des Modulations- und Demodulationssignals und zur Gewinnung eines Steuersignals für den Skalenfaktor-Regelkreis.

Der Erfindung liegt die Aufgabe zugrunde, ein Verfahren und eine Anordnung oder Einrichtung zur Drehratenmessung mittels eines faseroptischen Kreisels zu schaffen, mit denen die Signale für Modulation und Demodulation sowie die Signale zur Stabilisierung des Skalenfaktors auf wesentlich einfachere Weise erzeugt werden können. Außerdem soll eine vollständig digitale Signalverarbeitung mit einer als integrierter Schaltkreis (ASIC) zu verwirklichenden Anordnung ermöglicht werden, die frei ist von fertigungsbedingten Abweichungen der wirksamen Schleifenverstärkung.

Ausgehend von dem eingangs genannten und im Oberbegriff des Patentanspruchs 1 ebenfalls definierten Verfahren zur Drehratenmessung mittels eines faseroptischen Sagnac-Interferometers mit Phasenrückstellung besteht die erfindungsgemäße Lösung verfahrensmäßig darin, daß

- dem Steuersignal ein dritter Signalanteil zugesetzt wird, der, gesteuert von einem zweiten Zufallszahlengenerator, jeweils für die Zeit $T_0$ die Werte $\pi/2 + d$ oder $\pi/2 - d$ annimmt, wobei d eine vorgegebene kleine Testgröße ist, und daß
- das zusammengesetzte Steuersignal einem Integrationsprozeß mit Modulo-$2\pi$-Rückstellung unterworfen wird, bei dem sowohl das Rückstellsignal als auch der zweite und der dritte Signalanteil vor dem gemeinsamen Integrationsprozeß eingespeist werden.

Bei Anwendung dieses Verfahrens ist eine erfindungsgemäße Einrichtung, wie sie im Oberbegriff des unabhängigen Patentanspruchs 6 definiert ist, die sich zur Drehratenmessung mit einem phasenrückstellenden, faseroptischen Sagnac-Interferometer eignet, erfindungsgemäß dadurch gekennzeichnet, daß

- der erste Verstärker hinsichtlich seines Verstärkungsgrads $a_0$ steuerbar ist und daß
- die Auswerteschaltung über einen zweiten Hilfsregelkreis ein zweites Stellsignal für den Verstärkungsgrad $a_0$ des ersten Verstärkers bereitstellt, dessen Größe ein Maß für die Abweichung des Produkts

EP 0 551 537 B1

"$a_0 c_0$" von "1" ist, wobei mit $c_0$ eine Konstante bezeichnet ist, die von der mittleren Lichtleistung am Photodetektor, von dessen Empfindlichkeit sowie von der Gesamtverstärkung im Hauptregelkreis abhängt. Vorteilhafte Weiterbildungen und Ausführungsvarianten des erfindungsgemäßen Verfahrens und der zu seiner Durchführung geeigneten Einrichtung sind in abhängigen Patentansprüchen gekennzeichnet.

Eine vorteilhafte Ausführungsform einer erfindungsgemäßen Signalverarbeitung und Signalauswertung wird nachfolgend unter Bezug auf die Zeichnung beispielhaft beschrieben. Es zeigen:

Fig. 1    den prinzipiellen Anordnungsaufbau für eine Signalverarbeitung nach dem erfindungsgemäßen Verfahren zur Drehratenmessung mittels eines faseroptischen Kreisels,

Fig. 2    den Aufbau einer digitalen Auswerteschaltung, die in Fig. 1 mit dem Bezugzeichen 3 gekennzeichnet ist, und

Fig. 3    die Strukturanalyse eines Teils der Schaltung von Fig. 2 zur Erläuterung der statistischen Unabhängigkeit einer Demodulatorreferenz.

Die Signalverarbeitung der von dem Sagnac-Interferometer gelieferten Meßwerte sowie deren Auswertung wird nachfolgend abschnittweise beschrieben.

## 1. Das Sagnac-Interferometer

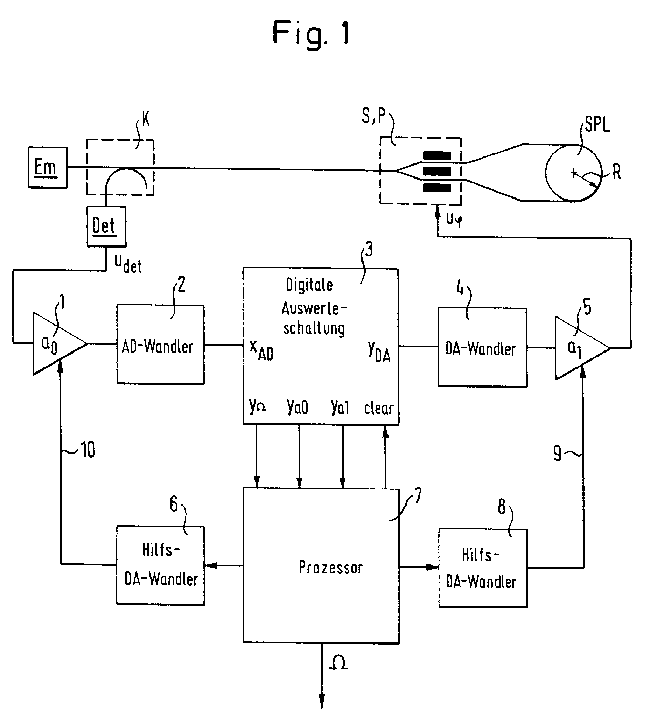

Der im oberen Teil der Fig. 1 wiedergegebene Aufbau des Sagnac-Interferometers entspricht vollständig dem einer üblicherweise verwendeten Anordnung. Eine Lichtquelle Em sendet Licht der Wellenlänge $\lambda$ und der Frequenz $\omega = 2\pi c/\lambda$, wobei c die Lichtgeschwindigkeit ist, aus. Die Lichtwellen durchlaufen einen Koppler K und werden dann in einem Strahlteiler S in zwei Teilstrahlen aufgeteilt. Beide Teilstrahlen durchlaufen einen Phasenmodulator P, der ihnen eine zusätzliche Phasenmodulation aufprägt. Dadurch entsteht zwischen den beiden Strahlen eine Phasenverschiebung $-\varphi(t) = -c_1 \cdot u_\varphi(t)$. Dabei ist $u_\varphi$ die Steuerspannung des Phasenmodulators P und $c_1$ der elektro-optische Koppelfaktor. Das negative Vorzeichen für die resultierende Phasendifferenz ist willkürlich gewählt worden. Beide Strahlen durchlaufen nun in entgegengesetzter Richtung eine mit der Winkelgeschwindigkeit $\Omega(t)$ gegen den Inertialraum rotierende, zu einer Spule SPL mit dem Radius R aufgewickelte Faser mit der Gesamtlänge $L_0$. Aufgrund des Sagnac-Effekts wird eine weitere Phasenverschiebung $\varphi_s(t) = \Omega(t) \cdot S'$ mit $S' = 4\pi R L_0/(\lambda c)$ zwischen den beiden Strahlen wirksam. Die Laufzeit des Lichts durch die Faserspule sei $T_0$. Nachdem beide Strahlen die Spule SPL passiert haben, besteht zwischen ihnen die Phasenverschiebung $\Omega(t) \cdot S' - \varphi(t - T_0)$. Beide Strahlen durchlaufen nun wieder den Phasenmodulator P, diesmal aber mit vertauschter Funktion, so daß als weitere Komponente die Phase $\varphi(t)$ mit positivem Vorzeichen hinzuaddiert wird. Beide Strahlen werden im Strahlteiler S demnach mit der Gesamtphasenverschiebung $\Omega(t) \cdot S' + \varphi(t) - \varphi(t - T_0)$ zur Interferenz gebracht. Nach der Vereinigung läuft die Lichtwelle wieder zum Koppler K, wo ein Teil der Energie zu einem Photodetektor D abgezweigt wird. Dort wird eine von der Phasenverschiebung der interferierenden Lichtstrahlen abhängige Ausgangsspannung $u_{det} = c_0 \cos(\Omega(t) \cdot S' + \varphi(t) - \varphi(t - T_0))$ erzeugt. Die Konstante $c_0$ hängt von der mittleren Lichtleistung am Empfänger, also am Photodetektor D, von dessen Empfindlichkeit und der Verstärkung nachfolgender Stufen ab. In Fig. 1 sind der Strahlteiler S und der Phasenmodulator P als ein Bauelement durch eine gestrichelte Umrandung gekennzeichnet. Dieses Bauelement kann in integrierter Optik als PYP-Chip ausgeführt sein.

## 2. Die Signalverarbeitung

Der untere Teil des Anordnungsaufbaus der Fig. 1 hat den Zweck, durch Einspeisen geeigneter Signale in den Phasenmodulator P das Sagnac-Interferometer in einen Zustand zu bringen, der eine Auswertung des Detektorsignals $u_{det}$ zum Zweck der Bestimmung der Drehrate $\Omega(t)$ gestattet.

Das vom Photodetektor Det erzeugte Signal $u_{det}$ wird einer Verstärkerstufe 1 mit der einstellbaren Verstärkung $a_0$ zugeführt. Dadurch wird das Signal auf einen definierten Pegel $a_0 \cdot u_{det}$ gebracht und anschließend durch einen AD-Wandler 2 digitalisiert. Das gewonnene Signal $x_{AD}$ wird einer digitalen Auswerteschaltung 3 zugeführt, die weiter unten ausführlich erläutert wird. Diese digitale Auswerteschaltung 3 erzeugt ein Ausgangssignal $y_{DA}$, das durch einen DA-Wandler 4 in eine analoge Spannung übersetzt und nach Multiplikation mit einem einstellbaren Verstärkungsfaktor $a_1$ dem Phasenmodulator P zugeführt wird. Zur Verstärkungseinstellung wird zweckmäßigerweise der DA-Wandler 4 als multiplizierender DA-Wandler 4, 5 vorgesehen, wobei an dessen Referenzspannungseingang 9 eine von einem Hilfs-DA-Wandler 8 gelieferte Spannung zur Beeinflussung der Verstärkung verwendet wird. Die digitale Auswerteschaltung 3, der AD-Wandler 2 und der multiplizierende DA-Wandler 4, 5 arbeiten mit der Taktzeit $T_0$. Damit ist ein geschlossener Signalpfad gebildet, dessen Funktion nachfolgend detailliert beschrieben wird.

Die digitale Auswerteschaltung 3 liefert zu bestimmten, wählbaren Zeitpunkten die Ausgabegrößen $y_\Omega$ für die Drehrate, $y_{a0}$ für den über einen Referenzeingang 10 an der Verstärkerstufe 1 einstellbaren Verstärkungs-

3

faktor $a_0$ des Eingangszweigs und $y_{a1}$ für den Verstärkungsfaktor $a_1$ des multiplizierenden DA-Wandlers 4, 5 im Ausgabezweig. Alle diese Größen sind gemittelte Werte, die zur Weiterverarbeitung einem Prozessor 7 zur Verfügung gestellt werden. Ein Eingang "clear" der Auswerteschaltung 3 wird vom Prozessor 7 oder einem Zeitgeber nach jedem Auslesen der gemittelten Ausgabewerte bedient und dient zur Rücksetzung von internen Mittelwertbildnern, die ebenfalls weiter unten näher erläutert werden. Der Prozessor 7 berechnet aus den vorgemittelten Größen $y_\Omega$, $y_{a0}$ und $y_{a1}$ nach eventueller weiterer Filterung die Meßgröße, d. h. die Drehrate $\Omega(t)$ und die zum Einstellen der Verstärkungsfaktoren $a_0$ und $a_1$ notwendigen Digitalsignale, die über die Hilfs-DA-Wandler 6 bzw. 8 die zugeordneten Verstärkerstufen 1 bzw. 5 beeinflussen.

### 3. Die digitale Auswerteschaltung

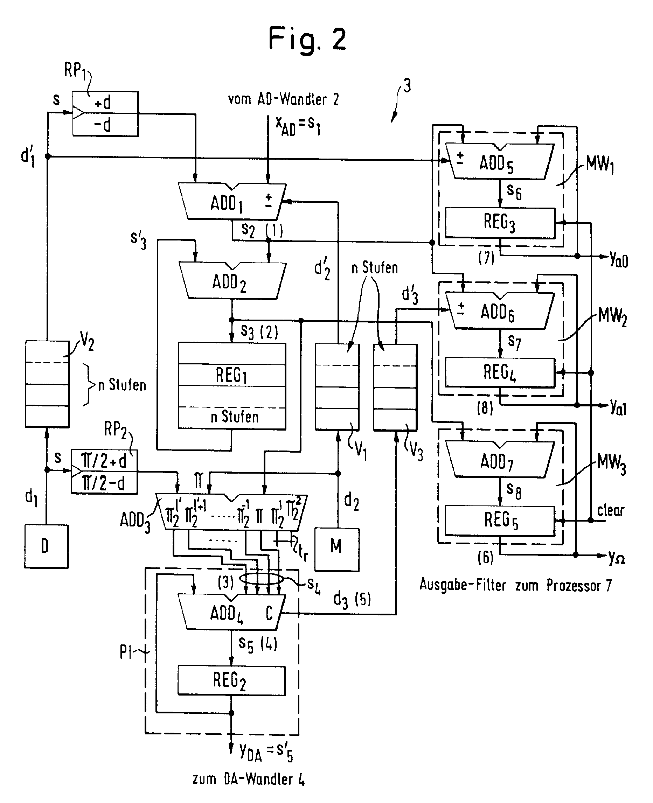

Die Bauteile und Baugruppen der digitalen Auswerteschaltung 3 sind in Fig. 2 dargestellt. Da über den Verstärkungsfaktor $a_1$ und den elektro-optischen Koppelfaktor $c_1$ eine Beziehung der ausgangsseitigen digitalen Datenworte $y_{DA}$ auf die optische Phase $\varphi$ hergestellt wird, kann durch geeignete Wahl oder Einstellung von $a_1$ erreicht werden, daß den einzelnen Bits im Datenwort $y_{DA}$ Phasenverschiebungen $\varphi$ am Modulator der Größe $v_k \pi \cdot 2^k$ entsprechen. Um die weiteren Ausführungen zu vereinfachen, werden diese Werte $v_k = \pi \cdot 2^k$ direkt den Stellenwertigkeiten der Bits des digitalen Datenworts zugeordnet. Diese Vereinbarung soll außer für $y_{DA}$ für alle digitalen Datenworte der Auswerteschaltung gelten, d. h., auch für die später erläuterten Datenworte $s_i$, i = 1, ..., 8, $s'_3$, $s'_5$, $y_{a0}$, $y_{a1}$ und $y_\Omega$. Das bedeutet, daß, abweichend von der Konvention, sich der Zahlenwert eines Datenworts s mit den Bits $\alpha_k$, k = 1, ..., m gemäß

$$s = \sum_{k=1}^{m} \alpha_k \, v_k. \quad v_k = \pi \cdot 2^k$$

berechnet. Dabei ist $\alpha_1$ das LSB und $\alpha_m$ das MSB des Datenworts. Für das Datenwort $y_{DA}$ mit den Bits $\alpha'_k$, k = 1' ... m' ist dann

$$y_{DA} = \sum_{k=1'}^{m'} \alpha'_k \pi \cdot 2^k$$

Da für die Phasenverschiebung gilt

$$\varphi = a_1 c_1 y_{DA}$$

ist für $a_1 c_1 = 1$ die Phase $\varphi = y_{DA}$. Damit gilt in diesem Fall

$$\varphi = \sum_{k=1'}^{m'} \alpha'_k \pi \cdot 2^k$$

Wie gezeigt wird, ist m' = 0.

Das vom AD-Wandler 2 gelieferte Eingangssignal $x_{AD}$ wird als internes Signal $s_1$ auf einen Eingang eines ersten Addierers $ADD_1$ gegeben. Dabei wird, abhängig von einem Demodulationssignal $d'_2$, das die Werte 0 oder 1 annehmen kann, noch eine Bewertung mit $1 - 2d'_2$, also mit +1 oder mit -1, durchgeführt. Das Demodulationssignal $d'_2(i)$ ist das um n Takte durch einen ersten Verzögerer $V_1$ mit n Verzögerungsstufen verzögerte, von einem ersten Zufallszahlengenerator M gelieferte Modulationssignal $d_2(i)$: d. h.: $d'_2(i) = d_2(i - n)$. Die Größe n ist innerhalb vorgegebener Grenzen voreinstellbar und dient, wie gezeigt wird, zur Laufzeitanpassung an den externen Signalpfad, der außer dem Interferometer auch die Baugruppen 1, 2, 4 und 5 der Fig. 1 umfaßt.

Die Signale $d_2(i)$ bzw. $d'_2(i)$ können, wie erwähnt, jeweils zwei Zustände (i = 0 oder 1) annehmen. Für $d'_2$ = 0 erfolgt im ersten Addierer $ADD_1$ eine Addition, für $d'_2$ = 1 eine Subtraktion der Größe (des Signals) $s_1$. Der andere Eingang des ersten Addierers $ADD_1$ ist mit einem ersten Registerpaar $RP_1$ verbunden, in das zwei vorgegebene, auch als Testgrößen bezeichnete Werte +d und -d eingespeichert sind.

Diese Testgröße d wird, wie später gezeigt wird, als zusätzliches Signal in den Hauptregelkreis (siehe Kapitel 4.2.1) eingespeist mit dem Ziel, dessen Schleifeverstärkung zu "messen" und diese mit einem Hilfsregelkreis (Referenzpfad, siehe Kapitel 4.2.3), der die steuerbare Verstärkerstufe 1 beeinflußt, auf einen definierten Sollwert zu regeln. Das dem Nutzsignal überlagerte Testsignal $\pm d$ soll hinreichend klein gewählt werden, um Übersteuerungen des externen Kreiselpfads zu vermeiden. Bei korrekt eingestellter Verstärkung kommt es, wie gezeigt wird, zu einer exakten Kompensation dieses Testsignals, so daß die Meßgenauigkeit des Interferometers unbeeinflußt bleibt.

Für die Auswahl des jeweils gewünschten Wertes ist ein Selekt-Eingang s vorhanden, der von einem Steuersignal $d'_1$ beaufschlagt ist. Der ausgewählte, am anderen Eingang des ersten Addierers $ADD_1$ wirksame Wert ist $(2d'_1 - 1) \cdot d$. Damit ergibt sich am Ausgang des ersten Addierers $ADD_1$ die Größe

$$s_2(i) = (2d'_1(i) - 1) \cdot d - (2d'_2(i) - 1) \cdot s_1(i) \quad (1)$$

In Fig. 2 sind die Numerierungen (1)....(8), der durch Gleichungen dargestellten Größen ebenfalls eingetragen, um das Verständnis der Funktion der Auswerteschaltung der Fig. 2 zu erleichtern.

Das Signal $d'_1$ entsteht, analog zu $d'_2$, durch n-stufige Verzögerung mit Hilfe eines zweiten Verzögerers $V_2$ aus einem Signal $d_1$. Das Signal $d_1$ wird durch einen vom ersten Zufallszahlengenerator M unabhängigen zweiten Zufallszahlengenerator D erzeugt. Die von $ADD_1$ erzeugte Summe $s_2$ wird auf die Eingänge von zwei weiter unten beschriebenen ersten und zweiten Mittelwertbildnern $MW_1$ und $MW_2$ bzw. digitalen Filtern mit einem fünften Addierer $ADD_5$ bzw. einem sechsten Addierer $ADD_6$ sowie auf einen ersten Eingang eines zweiten Addierers $ADD_2$ geführt. Dessen Summenausgang $s_3$ wird auf eine erste Registerkette $REG_1$ gegeben und als um n Takte verzögertes Signal $s'_3(i) = s_3(i - n)$ auf den anderen Eingang des zweiten Addierers $ADD_2$ zurückgeführt:

$$s_3(i) = s_3(i - n) + s_2(i) \quad (2)$$

Daneben speist das Signal $s_3$ noch einen dritten Mittelwertbildner $MW_3$ bzw. ein drittes digitales Filter mit einem siebten Addierer $ADD_7$, wie weiter unten erklärt wird, sowie einen ersten Eingang eines dritten Addierers $ADD_3$. Auf einen anderen Eingang von $ADD_3$ wird mit der Wertigkeit $\pi$ das oben beschriebene, vom ersten Zufallszahlengenerator M gelieferte Signal $d_2$ eingespeist. Auf die Stellen kleinerer Wertigkeit ($\pi/2$, $\pi/4$, ...) desselben Eingangs ist der selektierbare Ausgang eines zweiten Registerpaars $RP_2$ mit den eingespeicherten Werten $\pi/2 + d$ und $\pi/2 - d$ geschaltet. Die Selektion erfolgt mit dem oben beschriebenen Signal $d_1$, das vom zweiten Zufallszahlengenerator D erzeugt wird. Damit ergibt sich als Summenausgang von $ADD_3$ das Signal:

$$s_4(i) = s_3(i) + \pi/2 + d_2\pi + (2d_1 - 1) \cdot d \quad (3)$$

Vom Summensignal $s_4$ des dritten Addierers $ADD_3$ werden nun, wie in Fig. 2 veranschaulicht, an der Stelle "tr" alle Bits mit der Wertigkeit $2\pi$ und größer abgetrennt. Dieser Vorgang entspricht einer Modulo-$2\pi$-Operation.

Die verbleibenden Bits werden auf einen ersten Eingang eines aus einem vierten Addierer $ADD_4$ und einem zweiten Register $REG_2$ bestehenden Phasenintegrators PI geführt. Der Summenausgang $s_5$ von $ADD_4$ enthält ebenfalls nur alle Bits mit Wertigkeiten kleiner als $2\pi$. Er wird durch $REG_2$ um einen Takt verzögert und auf den anderen Eingang des vierten Addierers $ADD_4$ zurückgeführt. Das bei der Addition entstehende Übertragsbit C wird als Eingangssignal $d_3$ auf einen dritten, ebenfalls n-stufigen Verzögerer $V_3$ gegeben. Dadurch erhält man am Ausgang von $ADD_4$ das Summensignal

$$s_5(i) = mod2\pi[s_5(i - 1) + mod2\pi[s_4(i)]] \quad (4)$$

und als Übertragsignal

$$d_3(i) = \frac{s_5(i - 1) + mod2\pi[s_4(i)] - s_5(i)}{2\pi} \quad (5)$$

Gleichzeitig wird der Ausgang des Registers $REG_2$ als Ausgangssignal $y_{DA}$ nach außen auf den DA-Wandler 4 geführt.

Die Signale $s_2$ bzw. $s_3$ werden, wie oben erwähnt, auf die Eingänge von drei digitalen Filtern bzw. Mittelwertbildner $MW_1$, $MW_2$ bzw. $MW_3$ geschaltet. Diese sind von außen rücksetzbare Akkumulatoren, aufgebaut aus jeweils einem Addierer, dessen Ausgang über ein zugeordnetes Register auf einen Addiereingang rückgekoppelt ist, so daß über eine vorgegebene Zeitspanne von m Taktzyklen das zu mittelnde Signal aufsummiert wird.

So entsteht beispielsweise der gemittelte Drehratenwert $y_\Omega$ durch Akkumulation von $s_3$ mit $ADD_7$ über ein fünftes Register $REG_5$:

$$y_\Omega = \sum_{i=1}^{m} s_3(i) \quad (6)$$

Die Stellgröße $y_{a0}$ für den Verstärkungsfaktor $a_0$ entsteht im ersten Mittelwertbildner $MW_1$ durch eine mit $ADD_5$ über ein drittes Register $REG_3$ durchgeführte Akkumulation von $s_2$, wobei eine zusätzliche, von $d'_1$ abhängige Gewichtung von $s_2$ mit +1 oder -1 vorgenommen wird:

$$ya_0 = \sum_{i=1}^{m} s_2(i)(2d'_1(i)-1) \qquad (7)$$

Entsprechend entsteht die Einstellgröße $y_{a1}$ für den Verstärkungsfaktor $a_1$ durch von $d'_3$ abhängige, gewichtete Akkumulation von $s_2$ im zweiten Mittelwertbildner $MW_2$ mit $ADD_6$ und einem vierten Register $REG_4$. Die Vorzeichengewichtung $d'_3$ entspricht dem durch den dritten Verzögerer $V_3$ um n Takte verzögerten Signal $d_3$, das aus dem Übertragbit C mit der Wertigkeit $2\pi$ des vierten Addierers $ADD_4$ des Phasenintegrators PI gebildet wird:

$$ya_1 = \sum_{i=1}^{m} s_2(i)(2d'_3(i)-1) \qquad (8)$$

## 4. Die Funktionsweise

### 4.1 Interferometer

Wie bei der Beschreibung des Sagnac-Interferometers (Kapitel 1) dargelegt worden ist, liefert der Detektor D die Spannung

$$u_{det} = c_0 \cos(\Omega \cdot S' + \varphi(t) - \varphi(t - T_0)) \qquad (9)$$

Berücksichtigt man noch den elektro-optischen Koppelfaktor $c_1$ und die einstellbaren Verstärkungsfaktoren $a_0$ und $a_1$, so gilt für die digitalen Signale am Eingang der Auswerteschaltung 3:

$$x_{AD} = a_0 c_0 \cos[\Omega \cdot S' + a_1 c_1(y_{DA}(i) - y_{DA}(i - 1))] \qquad (10)$$

### 4.2 Regelkreise der Auswerteschaltung

### 4.2.1 Der Hauptregelkreis

Es sei zunächst angenommen, daß die Verstärkungsfaktoren $a_0$ und $a_1$ so eingestellt sind, daß $a_0 c_0 = 1$ und $a_1 c_1 = 1$ gilt. Außerdem seien aufgrund der Eigenschaften der Wandler 2, 4 noch n - 1 Totzeiten zu berücksichtigen. Dann ist

$$x_{AD}(i + n) = \cos(\Omega \cdot S' + y_{AD}(i + 1) - y_{DA}(i)) \qquad (11)$$

Wie ein Blick auf die Schaltung der Fig. 2 zeigt, ist $y_{DA}(i) = s'_5(i)$ und $y_{DA}(i + 1) = s_5(i)$. Außerdem gilt

$$s_4(i) = s_5(i) - s'_5(i) + k \cdot 2\pi \qquad (12)$$

Die $k \cdot 2\pi$-fache Abweichung ergibt sich infolge der bei "tr" stattfindenden Modulo-$2\pi$-Operation. Der Term $k \cdot 2\pi$ kann im Argument der Kosinusfunktion aufgrund ihrer Periodizität weggelassen werden. Daher ist

$$x_{AD}(i + n) = \cos(\Omega \cdot S' + s_4(i)) \qquad (13)$$

Zunächst gelte in den beiden Registerpaaren $RP_1$ und $RP_2$ für die Testgröße d = 0. Dann gilt

$$s_4(i) = s_3(i) + \pi/2 + d_2\pi \qquad (14)$$

und wegen $\cos(x + \pi/2) = -\sin(x)$ sowie $\sin(x) = -\sin(x + \pi)$ und $s_1 = x_{AD}$ folgt:

$$s_1(i + n) = \sin(\Omega \cdot S' + s_3(i)) \cdot (2d_2(i) - 1) \qquad (15)$$

Andererseits ist

$$s_2(i + n) = -s_1(i + n) \cdot (2d'_2(i + n) - 1)$$
$$= s_1(i + n) \cdot (2d_2(i) - 1) \qquad (16)$$

Daraus folgt nun

$$s_2(i + n) = -\sin(\Omega \cdot S' + s_3(i)) \qquad (17)$$

Die Auswerteelektronik ist ein geschlossener Regelkreis, der versucht, die Regelabweichung $\Omega \cdot S' + s_3(i)$

möglichst klein zu machen. Wenn diese im Argument der Sinusfunktion von Gleichung (17) stehende Größe klein ist, kann der Sinus näherungsweise durch sein Argument ersetzt werden, und es gilt:

$$s_2(i + n) = -\Omega \cdot S' - s_3(i) \quad (18)$$

oder, in z-transformierter Form:

$$S_2(z) = -z^{-n}(\Omega \cdot S' + S_3(z)) \quad (19)$$

Die nachfolgende, aus $ADD_2$ und $REG_1$ zusammengesetzte Stufe mit der Übertragungsfunktion

$$\frac{S_3(z)}{S_2(z)} = \frac{1}{1 - z^{-n}} \quad (20)$$

schließt den Regelkreis. Aus den letzten beiden Gleichungen (19) und (20) erhält man durch Elimination der Größe $S_2(z)$ die Beziehung

$$S_3(z) = -z^{-n}\Omega \cdot S' \quad (21)$$

Das Signal $s_3$ ist also der Drehrate $\Omega$ proportional. Der aus $ADD_7$ und $REG_5$ bestehende dritte Mittelwertbildner $MW_3$ erzeugt daraus das Signal $y_\Omega$.

### 4.2.2 Der Hilfsregelkreis für den Verstärkungsfaktor $a_1$

Die vorausgegangene Erklärung geht davon aus, daß die Bedingung $a_1c_1 = 1$ erfüllt ist. Ein besonderer (erster) Hilfsregelkreis soll $a_1$ nachregeln, bis diese Forderng erfüllt ist. Dabei wird vor allem die Tatsache berücksichtigt, daß die bei "tr" digital durchgeführte Modulo-$2\pi$-Operation ein zusätzliches Fehlersignal erzeugt, wenn im Interferometer die Phase nicht um exakt den der Modulo-Operation entsprechenden Wert $2\pi$ springt. Gemäß Gleichung (10) ist die am Detektor Det wirksame Phase

$$\varphi_d(i + 1) = \Omega \cdot S' + a_1c_1(s_5(i) - s_5(i - 1)) \quad (22)$$

Falls das Produkt $a_1c_1$ vom Idealwert "1" abweicht, kommt zur "idealen" Detektorphase noch ein Phasenfehler

$$\varphi_e(i + 1) = (a_1c_1 - 1)(s_5(i) - s_5(i - 1)) \quad (23)$$

hinzu. Nach der Demodulation erscheint dieser Phasenfehler als zusätzliches Drehratensignal. Dieses Fehlersignal ist also die mit $s_5(i) - s_5(i - 1)$ modulierte Skalenfaktorabweichung. Gemäß Gleichung (5) ist

$$s_5(i) - s_5(i - 1) = \text{mod}2\pi[s_4(i)] - 2\pi d_3(i) \quad (24)$$

Die rechte Seite dieser Gleichung kann als Zweierkomplementzahl mit dem Vorzeichenbit $d_3$ interpretiert werden. Damit ist $d_3$ das Vorzeichen des die Skalenfaktorabweichung $(a_1c_1 - 1)$ modulierenden Signals $[s_5(i) - s_5(i - 1)]$. Der solchermaßen modulierte Fehler erscheint nach n Takten mit dem Signal $s_2$ am Ausgang des ersten Addierers $ADD_1$ und wird mit dem ebenfalls um n Takte verzögerten Vorzeichen $d'_3(i)$ demoduliert, um die Regelgröße für $a_1$ abzuleiten. Dies geschieht mit dem aus $ADD_6$ und $REG_4$ aufgebauten zweiten Mittelwertbildner $MW_2$. Die zusätzliche Demodulation erfolgt über den $\pm$-Steuereingang des Addierers $ADD_6$. Das gemittelte Signal $y_{a1}$ am Ausgang des zweiten Mittelwertbildners $MW_2$ ist demnach ein Maß für die Abweichung des Verstärkungsfaktors $a_1$ vom Sollwert und wird dazu verwendet, den Faktor auf den Sollwert $a_1c_1 = 1$ einzustellen.

### 4.2.3 Der Hilfsregelkreis für den Verstärkungsfaktor $a_0$

Als Teil des Erfindungsgedankens wurde erkannt, daß es für die Stabilität des Hauptregelkreises notwendig ist, daß die Schleifenverstärkung den korrekten, durch $a_0c_0 = 1$ bestimmten Wert hat. Damit diese Bedingung stets erfüllt ist, ist zur Einstellung von $a_0$ ein weiterer (zweiter) Hilfsregelkreis vorgesehen. Gemäß Gleichung (18) ergibt sich bei $\Omega = 0$ für das Signal $s_2$ das um n Takte verzögerte Signal $-s_3$. Für $\Omega = 0$ und $a_0c_0 \neq 1$ wird Gleichung (18)

$$s_2(i + n) = -a_0c_0s_3(i) \quad (25)$$

Damit nun automatisch ein Maß für die Abweichung des Faktors $a_0$ vom Idealwert gefunden werden kann, wird in das zweite Registerpaar $RP_2$ zusätzlich zu dem Wert $\pi/2$ noch die oben erwähnte kleine Testgröße $+d$ und $-d$ eingespeichert. Dadurch wird nun in den dritten Addierer $ADD_3$ zu $s_3$ ein zusätzliches, im Vorzeichen vom zweiten Zufallszahlengenerator D gesteuertes Testsignal $(2d_1(i) - 1) \cdot d$ eingespeist.

Interessiert man sich zunächst nur für die Auswirkung des Testsignals d allein, so wird mit Gleichung (25)

$$s_2(i + n) = -a_0c_0 \cdot (2d_1(i) - 1) \cdot d \quad (26)$$

Werden nun in das erste Registerpaar $RP_1$ dieselben Testgrößen $+d$ und $-d$ eingespeichert, so wird zu $s_2(i$

+ n) das Testsignal $(2d_1(i + n) - 1) \cdot d$ addiert und es gilt

$$s_2(i + n) = (1 - a_0c_0)(2d_1(i) - 1) \cdot d \quad (27)$$

Es ist also am Ausgang des ersten Addierers $ADD_1$ eine mit $(1 - a_0c_0)$ bewertete Komponente des Testsignals d vorhanden. Diese wird mit dem ersten Mittelwertbildner $MW_1$, dessen Eingangssignal $s_2$ noch zusätzlich mit dem Vorzeichen des Testsignals d bewertet wird, herausgefiltert. Dadurch ist das gemittelte Signal $y_{a0}$ ein Maß für die Abweichung des Produkts $a_0c_0$ von 1 und kann zur Einstellung der Steuergröße $a_0$ auf dessen Sollwert der Verstärkerstufe 5 verwendet werden.

## 5. Die statistische Unabhängigkeit

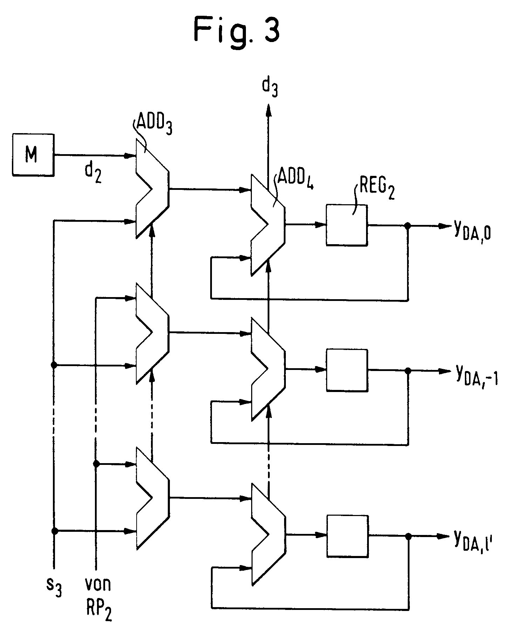

Um unempfindliche Bereiche der Drehratenmeßanordnung zu vermeiden, die auf Überkopplung des Ausgangssignals $y_{DA}$ auf den Eingang $x_{AD}$ zurückzuführen sind, wird in der Auswerteschaltung nach Fig. 2 dafür gesorgt, daß das Signal $y_{DA}$ nicht mit der Demodulatorreferenz $d'_2$ korreliert ist. Die einzige gemeinsame Informationsquelle für die beiden Signale ist der erste Zufallszahlengenerator M, der das Modulationssignal $d_2$ erzeugt. Zunächst läßt sich zeigen, daß nur das höchstsignifikante Bit MSB von $y_{DA}$ von $d_2$ abhängig ist. Bei geeigneter Wahl der Parameter des ersten Zufallszahlengenerators M läßt sich jedoch erreichen, daß trotz dieser Abhängigkeit keine Korrelation zwischen dem MSB von $y_{DA}$ und $d_2$ besteht. Damit sind auch $y_{DA}$ und die Demodulatorreferenz $d'_2$, wie nachfolgend mit Bezug auf Fig. 3 gezeigt wird, unkorreliert.

Unempfindliche Bereiche der Drehratenmeßanordnung werden durch Überkopplungen des Signals $y_{DA}$ auf den Eingang $x_{AD}$ hervorgerufen, wenn gleichzeitig die in $y_{DA}$ vorhandenen, vom ersten Zufallszahlengenerator M herrührenden Signalanteile mit der Demodulatorreferenz $d'_2$ korreliert sind. Um diese Korrelation zu ermitteln, muß zunächst der Signalpfad vom ersten Zufallszahlengenerator M bis zum Ausgangssignal $y_{DA}$ analysiert werden. Wegen der in diesem Pfad auftretenden Modulo-$2\pi$ Operation sind die Addierer $ADD_3$ und $ADD_4$ nur bis zu einer Stellenwertigkeit von $v_0 = \pi$ ausgebaut. Eine Analyse auf Volladdiererebene zeigt für die Addierer $ADD_3$, $ADD_4$ und das zweite Register $REG_2$ die in Fig. 3 veranschaulichte Struktur.

Man sieht, daß das vom ersten Zufallszahlengenerator M gelieferte Signal $d_2$ sich **nur** auf das höchstsignifikante Bit MSB des DA-Wandlers 4. $y_{DA,0}$ auswirkt. Der Summenausgang eines Volladdierers liefert, als logische Funktion betrachtet, die EXOR-Verknüfung der beiden Eingangssummanden und eines eventuellen Eingangsübertrags. Unter der Berücksichtigung der Kommutativität der EXOR-Operation liest man aus dem Strukturbild der Fig. 3 ab, daß sich $Y_{DA,0}(i)$ zum Zeitpunkt i ergibt als eine Kette von EXOR-Operationen aus $y_{DA,0}(i-1)$, $d_2(i)$, und einem Rest $v(i)$, der ausschließlich von dem Rückstellsignal $s_3(i)$ und dem eingespeisten Testsignal $\pi/2\pm d$ abhängt. Interpretiert man die logischen Pegel der Signale $d_2$ und $y_{DA,0}$ als analoge Signalpegel mit den Wert $\pm 1$, und definiert hierfür die neue Variable $t(i) = 1-2 \cdot d_2(i)$ und $r(i) = 1-2 \cdot y_{DA,0}(i)$, dann wird aus der EXOR-Operation eine Multiplikation, und es gilt:

$$r(i) = r(i - 1) \cdot t(i) \cdot v(i)$$

wobei das Restsignal $v(i)$ bereits in der analogen Darstellung mit den möglichen Werten $\pm 1$ gegeben sei.

Die von dem Zufallszahlengenerator M gelieferten Wertet $t(i) \in \{-1,1\}$ seien gleichverteilt und unkorreliert:

$$\overline{t(i)} = \lim_{N \to \infty} \frac{1}{1+2N} \sum_{i=-N}^{N} t(i) = 0$$

$$Ctt(j) = \overline{t(i)t(i+j)} = \lim_{N \to \infty} \frac{1}{1+2N} \sum_{i=-N}^{N} t(i)t(i+j) = 0; j \neq 0$$

Da $t(i)$ von $r(i-j)$, $j>0$ statistisch unabhängig ist, und $t(i)$ voraussetzungsgemäß mittelwertfrei ist, ist auch die Folge $r(i-j) \cdot t(i)$ mittelwertfrei. Da jene wiederum unabhängig vom Restsignal $v(i)$ ist, ist auch

$$\overline{r(i - j) \cdot t(i) \cdot v(i)} = 0$$

Damit gilt mit j = 1:

$$\overline{r(i)} = \lim_{N\to\infty} \frac{1}{1+2N} \sum_{i=-N}^{N} r(i-1)t(i)v(i) = 0$$

Da t(i) auch von $r(i-1) \cdot r(i-j), j > 0$ unabhängig ist, gilt mit derselben Begründung wie oben und wegen $r(i)r(i-j) = r(i-1)r(i-j)v(i)t(i)$:

$$C_{rr}(j) = C_{rr}(-j) = \lim_{N\to\infty} \frac{1}{1+2N} \sum_{i=-N}^{N} r(i-1)r(i-j)v(i)t(i) = 0; \; j \neq 0$$

Damit ist gezeigt, daß auch die Folge r(i) mittelwertfrei ist und aus statistisch voneinander unabhängigen Komponenten besteht.

Gesucht ist nun die Korrelation zwischen dem im Ausgabesignale $y_{DA}(i)$ auftretenden Signalanteil r(i) und der Demodulatorreferenz $d'_2(i)$, das ist in analoger Darstellung t(i-n). Es ist.

$$C_{rt}(j) = \lim_{N\to\infty} \frac{1}{1+2N} \sum_{i=-N}^{N} r(i+j) \cdot t(i)$$

$$= \lim_{N\to\infty} \frac{1}{1+2N} \sum_{i=-N}^{N} r(i)r(i-1)r(i+j)v(i)$$

Für $j \neq 0, -1$ folgt sofort $C_{rt}(j) = 0$, da für jedes gegebene i die Folgen r(i), r(i-1), r(i+j) und v(i) voneinander unabhängig sind, und r(i) mittelwertfrei ist. Für $j = -1$ ist

$$C_{rt}(-1) = \lim_{N\to\infty} \frac{1}{1+2N} \sum_{i=-N}^{N} r(i)v(i) = 0$$

da r(i) mittelwertfrei und von v(i) unabhängig ist. Mit derselben Begründung ist auch für $j = 0$

$$C_{rt}(0) = \lim_{N\to\infty} \frac{1}{1+2N} \sum_{i=-N}^{N} r(i-1)v(i) = 0$$

Die Demodulatorreferenz $t(i) = 1-2 \cdot d_2(i)$ ist damit statistisch unabhängig vom DA-Wandler-MSB $r(i) = 1-2 \cdot y_{DA,0}(i)$ und, da die restlichen Bits des DA-Wandlers, wie am Strukturbild der Fig. 3 gezeigt, ohnehin unabhängig von t(i) sind, auch von $y_{DA}$.

Bei mehrachsigen Systemen sind das Interferometer, die Verstärker 1, 5, die Wandler 2, 4 und die Auswerteschaltung 3 mehrfach vorhanden. Bei kompaktem Aufbau besteht häufig das Problem des Übersprechens an den analogen Eingangsverstärkern, so daß die Auswerteschaltung 3 für eine Achse unter Umständen auf Drehraten in einer anderen Achse reagiert. Dieses Problem wurde mit der Erfindung durch die Verwendung der statistisch voneinander unabhängiger Demodulatorreferenzen beseitigt. Bei einem in der Praxis erprobten dreiachsigen System konnte gezeigt werden, daß die Entkopplung selbst dann noch wirksam ist, wenn alle drei Detektorsignale zu einem einzigen gemeinsamen Signal für alle drei Kanäle zusammenaddiert werden. Dadurch ergibt sich die Möglichkeit, mehrachsige Systeme mit einem einzigen analogen Eingangspfad, bestehend aus dem Detektor D, dem Eingangsverstärker 1 und dem AD-Wandler 2, aufzubauen.

Gegenüber der Drehratenmeßanordnung, wie sie in EP-A1-0 441 998 beschrieben ist, ergeben sich mit der Erfindung vielfache Vorteile, die im folgenden kurz zusammengefaßt dargestellt werden sollen:

- Für die Erzeugung des Referenzsignals zur Demodulation des Skalenfaktorfehlers wird keine zusätzliche Einheit mit einem Speicher und Subtrahierwerk benötigt. Bei der erfindungsgemäßen Schaltungsanordnung gemäß Fig. 2 wird die erforderliche Information direkt dem Übertragungsbit des Phasenintegrators PI entnommen.

- Für die Dekorrelation von Demodulator- und Modulatorsignal werden - wie im Abschnitt "Statistische Unabhängigkeit" gezeigt - der Addierer ADD$_3$ und der Phasenintegrator PI in Doppelfunktion ausgenutzt, d. h. spezielle Gatter und Speicher, wie beim Stand der Technik, werden nicht benötigt.
- Fertigungsbedingte Abweichungen der wirksamen Verstärker und Verstärkungsschwankungen während des Betriebs im Empfängerpfad, bestehend aus dem Detektor Det und der nachgeschalteten Verstärkerstufe 1, werden durch eine zusätzliche Konstanthaltung der Schleifenverstärkung des Hauptregelkreises ausgeglichen. Gemäß der Erfindung werden hierzu die zusätzlichen, in der digitalen Auswerteschaltung 3 enthaltenen Baugruppen, bestehend aus der zweiten Verzögerungskette V$_2$ und den Umschalteregistern RP$_1$ und RP$_2$, benutzt. Diese Baugruppen wirken wie ein interner Referenzpfad mit Sollverstärkung "1" und dienen in der beschriebenen Weise zur Stabilisierung der Verstärkung des externen Kreiselpfads.
- Für den Hauptregelkreis ist eine konkrete Dimensionierung angegeben, die unter Berücksichtigung einer im Prinzip beliebigen Anzahl n von "Totzeiten" im Regelkreis eine frequenzunabhängige Auslesecharakteristik garantiert. Zu diesem Zweck ist das aus dem zweiten Addierer ADD$_2$ und der Registerkette REG$_1$ bestehende Digitalfilter mit der Übertragungsfunktion $1/(1-z^{-1})$ vorgesehen.

## Literaturliste

Lit. [1] US-A-4 705 399
Lit. [2] DE-A1-31 44 162
Lit. [3] Lefevre H.C. et al.: "Integrated Optics: A Practical Solution for the Fiber-Optic Gyroscope", SPIE Vol. 719, Fiber Optic Gyros, 1986
Lit. [4] EP-A-0 436 052
Lit. [5] EP-A-0 441 998
Lit. [6] Europäische Patentanmeldung Nr. 90 102 739.1

## Patentansprüche

1. Verfahren zur Drehratenmessung mittels eines faseroptischen Sagnac-Interferometers mit Phasenrückstellung, bei dem
   - zwei aus einer Lichtquelle (Em) stammende, polarisierte und durch Strahlteilung erzeugte Lichtstrahlen in entgegengesetzten Richtungen in eine Faserspule (SPL) eingestrahlt und anschließend wiedervereinigt werden,
   - das dabei entstehende Interferenzbild detektiert und ein der Lichtintensität des Interferenzbildes entsprechendes elektrisches Signal (u$_{det}$) erzeugt wird, und bei dem
   - die beiden Lichtstrahlen durch ein aus mehreren variablen Anteilen zusammengesetztes Steuersignal (u$_\varphi$) moduliert werden, von denen ein erster Signalanteil ein über einen digitalen Regelprozeß erzeugtes Rampensignal ist, welches nichtreziproke inkrementale Phasenverschiebungen der beiden Lichtstrahlen kompensiert und von denen ein zweiter Signalanteil, gesteuert von einem ersten Zufallszahlengenerator (M), jeweils für eine Zeit T$_0$ die Werte Null oder $\pi$ annimmt, wobei T$_0$ der Laufzeit jedes der beiden Lichtstrahlen durch die Faserspule (SPL) im Ruhezustand entspricht,
   **dadurch gekennzeichnet, daß**
   - dem Steuersignal (u$_\varphi$) ein dritter Signalanteil zugesetzt wird, der, gesteuert von einem zweiten Zufallszahlengenerator (D), jeweils für die Zeit T$_0$ die Werte $\pi/2 + d$ oder $\pi/2 - d$ annimmt, wobei d eine vorgegebene kleine Testgröße ist, und daß
   - das zusammengesetzte Steuersignal einem Integrationsprozeß mit Modulo-$2\pi$-Rückstellung unterworfen wird, bei dem sowohl das Rückstellsignal als auch der zweite und der dritte Signalanteil vor dem gemeinsamen Integrationsprozeß eingespeist werden.

2. Verfahren nach Anspruch 1, **dadurch gekennzeichnet,** daß die Testgröße d nach Verzögerung um einen der Signaldurchlaufzeit durch den externen Interferometer-Signalweg entsprechenden Zeitspanne als vorzeichenangepaßte Kompensationsgröße zum digitalisierten und demodulierten Interferenzbildsignal (x$_{AD}$) addiert wird.

10

3. Verfahren nach Anspruch 2, **dadurch gekennzeichnet,** daß die im kompensierten Additionssignal vorhandene, mit einem Faktor "$(1-a_0c_0)$" bewertete Komponente des Testsignals d nach Mittelwertbildung bei gleichzeitiger Bewertung mit dem Vorzeichen des Testsignals d als Steuergröße für die momentane Sollwerteinstellung des Modulations-Steuersignals ($u_\varphi$) verwendet wird, wobei $a_0$ den Verstärkungsfaktor für das Steuersignal ($u_\varphi$) und $c_0$ eine Konstante bezeichnen, die von der mittleren Lichtleistung am Interferenzbild-Detektor (D), von dessen Empfindlichkeit und der Verstärkung des Interferenzbildsignals ($u_{det}$) abhängt.

4. Verfahren nach Anspruch 2, **dadurch gekennzeichnet,** daß das mit dem um die Signallaufzeit durch den externen Interferometer-Signalweg verzögerte Signal des ersten Zufallszahlengenerators (M) bewertete Additionssignal in einem digitalen Synchrondemodulator ($ADD_1$) demoduliert und nach digitaler Filterung ($ADD_2$, $REG_1$) und Mittelwertbildung ($MW_3$) als drehratenproportionales Signal ($y_\Omega$) ausgegeben wird.

5. Verfahren nach Anspruch 4, **dadurch gekennzeichnet,** daß das mit dem verzögerten Signal des ersten Zufallszahlengenerators (M) bewertete Additionssignal ($s_2$) einer digitalen Mittelwertbildung (MW2) unterzogen wird bei gleichzeitiger Vorzeichengewichtung mit einem aus dem gemeinsamen Integrationsprozeß aus der Modulo-$2\pi$-Rückstellung gewonnenen Übertragbit der Wertigkeit $2\pi$, und daß das Ergebnis dieser Mittelwertbildung als Einstellgröße ($y_{a1}$) für den Verstärkungsfaktor ($a_1$) des detektierten Interferenzbildsignals verwendet wird.

6. Einrichtung zur Drehratenmessung mit einem phasenrückstellenden, faseroptischen Sagnac-Interferometer, bei dem
   - zwei aus einer Lichtquelle (Em) stammende, mittels eines Polarisators (P) polarisierte und durch einen Strahlteiler (S) erzeugte Lichtstrahlen in entgegengesetzten Richtungen in eine Faserspule (SPL) eingestrahlt und anschließend am Strahlteiler (S) wiedervereinigt werden,
   - das aus der Strahlvereinigung entstehende Interferenzbild durch einen Photodetektor (Det) abgetastet wird, der ein der Lichtintensität des Interferenzbildes entsprechendes Signal ($u_{det}$) liefert, das einen ersten Verstärker (1) mit nachgeschaltetem AD-Wandler (2) beaufschlagt, dessen Ausgangswerte in einer digitalen Auswerteschaltung (3) verarbeitet werden, die
     -- einerseits das über einen Hauptregelkreis ($ADD_1$, M, $V_1$, $ADD_2$, $REG_1$, $ADD_3$, PI, $MW_3$) erzeugte digitale Phasenrückstellsignal ($y_{DA}$) an einen DA-Wandler (4) mit nachgeschaltetem zweitem Verstärker (5) zur Gewinnung des den Phasenmodulator (P) beaufschlagenden Rückstellsignals ($u_\varphi$) und ein drehratenproportionales Signal ($y_\Omega$) sowie
     -- andererseits über einen ersten Hilfsregelkreis ($ADD_1$, $ADD_2$, $REG_1$, $ADD_3$, PI, $V_3$, $MW_2$) ein erstes Stellsignal ($y_{a1}$) für den Verstärkungsfaktor $a_1$ des zweiten Verstärkers (5) bereitstellt, derart, daß die Sollwertbeziehung $a_1c_1 = 1$ erfüllt ist, wobei mit $c_1$ der elektrooptische Koppelfaktor bezeichnet ist,
   **dadurch gekennzeichnet, daß**
   - der erste Verstärker (1) hinsichtlich seines Verstärkungsgrads $a_0$ steuerbar ist und
   - die Auswerteschaltung (3) über einen zweiten Hilfsregelkreis ($ADD_1$, D, $V_2$, $RP_1$, $RP_2$, $MW_1$) ein zweites Stellsignal ($y_{a0}$) für den Verstärkungsgrad $a_0$ des ersten Verstärkers (1) bereitstellt, dessen Größe ein Maß für die Abweichung des Produkts "$a_0c_0$" von "1" ist, wobei mit $c_0$ eine Konstante bezeichnet ist, die von der mittleren Lichtleistung am Photodetektor (Det), von dessen Empfindlichkeit sowie von der Gesamtverstärkung im Hauptregelkreis abhängt.

7. Einrichtung nach Anspruch 6, **dadurch gekennzeichnet,** daß der Hauptregelkreis folgende Baugruppen umfaßt:
   - einen ersten Addierer ($ADD_1$), den eingangsseitig das Ausgangssignal ($x_{AD}$) des AD-Wandlers (2) sowie ein über ein erstes Umschaltregister ($RP_1$) zugeführtes vorzeichenbewertetes Kompensations-Testsignal ($d_{1'}$) von einem zweiten Zufallszahlengenerator (D) über einen zweiten, Signallaufzeiten ausgleichenden Verzögerer ($V_2$) beaufschlagt und dessen Eingangssignal ($x_{AD}$) gleichzeitig durch ein von dem ersten Zufallszahlengenerator (M) abgeleitetes, zum Zwecke des Signallaufzeitausgleichs über einen ersten Verzögerer ($V_1$) zugeführtes Vorzeichensignal ($d'_2$) bewertet ist;
   - einen vom Ausgangssignal des ersten Addierers ($ADD_1$) beaufschlagtes digitales Filter ($ADD_2$, $REG_2$), dessen Ausgangssignal ($s_3$) dem Drehratensignal entspricht, das über einen dritten Mittelwertbildner ($ADD_7$, $REG_5$) ausgegeben wird;
   - eine Additions-Integrationsstufe ($ADD_3$, PI), der eingangsseitig das Drehratensignal ($s_3$) vom Demodulator als erster Signalanteil das mit 0 oder $\pi$ bewertete Signal ($d_2$) vom ersten Zufallszahlengene-

rator (M) als zweiter Signalanteil sowie über ein zweites Umschaltregister (RP$_2$) das um $\pi/2$ ergänzte Testsignal d vom zweiten Zufallszahlengenerator (D) als dritter Signalanteil zugeführt wird, wobei in der Integrationsstufe eine Modulo-2$\pi$-Rückstellung erfolgt.

8. Einrichtung nach Anspruch 7, **dadurch gekennzeichnet,** daß zum ersten Hilfsregelkreis außer dem ersten Addierer (ADD$_1$) ein zweiter Mittelwertbildner (MW$_2$) gehört, in dessen Addierstufe (ADD$_6$) eine Vorzeichenbewertung des Ausgangssignals des ersten Addierers (ADD$_1$) mit dem Übertragsignal (d$_3$) aus der Modulo-2$\pi$-Rückstellung in der Integrationsstufe (PI) erfolgt.

9. Einrichtung nach Anspruch 7 oder 8, **dadurch gekennzeichnet,** daß zum zweiten Hilfsregelkreis außer dem ersten Addierer (ADD$_1$) ein erster Mittelwertbildner (MW$_1$) gehört, in dessen Addierstufe (ADD$_5$) eine Vorzeichenbewertung des Ausgangssignals des ersten Addierers (ADD$_1$) mit dem zum Zwecke des Signallaufzeitausgleichs verzögerten Signal des zweiten Zufallszahlengenerators (D) erfolgt.

10. Einrichtung nach einem der vorstehenden Ansprüche 6 bis 9, **dadurch gekennzeichnet,** daß bei einem mehrachsigen Drehratenmeßsystem, bei dem jeder Meßachse eine individuelle Interferometer-Anordnung zugeordnet ist, die Photodetektorsignale aller Interferometer zu einem einzigen gemeinsamen Signal für alle Kanäle zusammengefaßt auf einen einzigen Analogkanal geschaltet sind, der nur einen Photodetektor (Det), einen Eingangsverstärker (1) und einen gemeinsamen AD-Wandler (2) umfaßt.

## Claims

1. A method for rotational speed measurement by means of a fiber-optic Sagnac interferometer with phase resetting, in which
   - two polarized light beams originating from one light source (Em) and generated by beam splitting are irradiated in opposite directions into a fiber coil (SPL) and subsequently reunited,
   - the interference pattern produced in the process is detected, and an electrical signal (u$_{det}$) corresponding to the light intensity of the interference pattern is generated, and in which
   - the two light beams are modulated by a control signal (u$_\varphi$) composed of a plurality of variable components, of which a first signal component is a resetting signal, which is generated via a digital control process and which compensates non-reciprocal, incremental phase shifts in the two light beams, and of which a second signal component, controlled by a first random number generator (M), assumes in each case for a time T$_0$ the values 0 or $\pi$, T$_0$ corresponding to the transit time of each of the two light beams through the fiber coil (SPL) in the quiescent state,

   wherein
   - there is added to the control signal (u$_\varphi$) a third signal component which, controlled by a second random number generator (D), assumes for the time T$_0$ in each case the values $\pi/2$ + d or $\pi/2$ - d, d being a prescribed small test variable, and in that
   - the combined control signal is subjected to an integration process with modulo-2$\pi$ resetting, in which both the resetting signal and the second and the third signal component are supplied before the joint integration process.

2. The method as claimed in claim 1, wherein after delay by a period corresponding to the signal transit time through the external interferometer signal path the test variable d is added as a sign-matched compensation variable to the digitized and demodulated interference pattern signal (x$_{AD}$).

3. The method as claimed in claim 2, wherein the component, present in the compensated addition signal and weighted with a factor "(1-a$_0$c$_0$)", of the test signal d is used after averaging in conjunction with simultaneous weighting with the sign of the test signal d as control variable for the instantaneous nominal value adjustment of the modulation control signal (u$_\varphi$), a$_0$ designating the gain for the control signal (u$_\varphi$) and c$_0$ denoting a constant which depends on the mean light power at the interference pattern detector (D), on the sensitivity thereof and the gain of the interference pattern signal (U$_{det}$).

4. The method as claimed in claim 2, wherein the addition signal weighted with the signal of the first random number generator (M) delayed by the signal transit time through the external interferometer signal path is demodulated in a digital synchronous demodulator (ADD$_1$) and output after digital filtering (ADD$_2$, REG$_1$) and averaging (MW$_3$) as a signal (y$_\Omega$) proportional to the rotational speed.

5. The method as claimed in claim 4, wherein the addition signal ($s_2$) weighted with the delayed signal of the first random number generator (M) is subjected to digital averaging ($MW_2$) in conjunction with simultaneous sign weighting with a carry bit of significance $2\pi$ obtained from the modulo-$2\pi$ resetting from the common integration process, and the result of said averaging is used as adjusting variable ($y_{a1}$) for the gain ($a_1$) of the detected interference pattern signal.

6. A device for rotational speed measurement having a phase-resetting, fiber-optic Sagnac interferometer, in which
   - two light beams originating from one light source (Em), polarized by means of a polarizer (P) and generated by a beam splitter (S), are irradiated in opposite directions into a fiber coil (SPL) and subsequently reunited at the beam splitter (S),
   - the interference pattern produced from the beam recombination is scanned by a photodetector (Det) which supplies a signal ($u_{det}$) that corresponds to the light intensity of the interference pattern and is applied to a first amplifier (1) having a downstream analog-to-digital converter (2) whose output values are processed in a digital evaluation circuit which, on the one hand, provides a digital-to-analog converter (4) having a downstream second amplifier (5) with the digital phase-resetting signal ($Y_{DA}$) generated via a primary control loop ($ADD_1$, M, $V_1$, $ADD_2$, $REG_1$, $ADD_3$, PI, $MW_3$), in order to obtain the resetting signal ($u_\varphi$), which is applied to the phase modulator (P), and a signal ($y_\Omega$) proportional to the rotational speed and, on the other hand, provides via a first auxiliary control loop ($ADD_1$, $ADD_2$, $REG_1$, $ADD_3$, PI, $V_3$, $MW_2$) a first actuating signal ($Y_{a1}$) for the gain $a_1$ of the second amplifier (5), in such a way that the nominal value relationship $a_1c_1 = 1$ is fulfilled, $c_1$ denoting the electrooptic coupling factor,
   wherein
   - the gain $a_0$ of the first amplifier (1) is controllable, and
   - via a second auxiliary control loop ($ADD_1$, D, $V_2$, $RP_1$, $RP_2$, $MW_1$) the evaluation circuit (3) provides a second actuating signal ($Y_{a0}$) for the gain $a_0$ of the first amplifier (1), the value of which is a measure of the deviation of the product "$a_0c_0$" from "1", $c_0$ denoting a constant which depends on the mean light power at the photodetector (Det), on the sensitivity thereof and on the total gain in the primary control loop.

7. The device as claimed in claim 6, wherein the primary control loop comprises the following sub-assemblies:
   - a first adder ($ADD_1$), to which on the input side the output signal ($x_{AD}$) of the analog-to-digital converter (2) and a sign-weighted compensation test signal ($d'_1$), supplied via a first changeover register ($RP_1$), are applied from a second random number generator (D) via a second delay block ($V_2$), which compensates signal transit times, and whose input signal ($x_{AD}$) is simultaneously weighted by a sign signal ($d'_2$) derived by the first random number generator (M) and supplied for the purpose of compensating signal transit time via a first delay block ($V_1$);
   - a digital filter ($ADD_2$, $REG_2$) to which the output signal of the first adder ($ADD_1$) is applied and whose output signal ($s_3$) corresponds to the rotational speed signal, which is output via a third averaging unit ($ADD_7$, $REG_5$);
   - an addition/integration stage ($ADD_3$, PI) to which on the input side the rotational speed signal ($s_3$) is supplied as first signal component from the demodulator, the signal ($d_2$), weighted with 0 or $\pi$, is supplied as second signal component from the first random number generator (M), and, via a second changeover register ($RP_2$), the test signal d, supplemented by $\pi/2$, is supplied as third signal component from the second random number generator (D), a modulo-$2\pi$ resetting being performed in the integration stage.

8. The device as claimed in claim 7, wherein in addition to the first adder ($ADD_1$) there belongs to the first auxiliary control loop a second averaging unit ($MW_2$) in whose adding stage ($ADD_6$) a sign weighting of the output signal of the first adder ($ADD_1$) is performed in the integration stage (PI) with the carry signal ($d_3$) from the modulo-$2\pi$ resetting.

9. The device as claimed in claim 7 or 8, wherein in addition to the first adder ($ADD_1$) there belongs to the second auxiliary control loop a first averaging unit ($MW_1$), in whose adding stage ($ADD_5$) a sign-weighting of the output signal of the first adder ($ADD_1$) is performed with the signal, delayed for the purpose of compensating the signal transit time, of the second random number generator (D).

**10.** The device as claimed in one of the preceding claims 6 to 9, wherein in the case of a multiaxis rotational speed measuring system in which an individual interferometer arrangement is assigned to each measurement axis, the photodetector signals of all the interferometers, combined to form a single common signal for all the channels, are connected to a single analog channel which comprises only a photodetector (Det), an input amplifier (1) and a common analog-to-digital converter (2).

**Revendications**

**1.** Procédé de mesure de vitesse de rotation au moyen d'un interféromètre de Sagnac à fibre optique avec remise à zéro de phase dans lequel
- deux faisceaux lumineux émis par une source de lumière (Em), polarisés et produits par fractionnement des rayons, sont injectés dans une bobine de fibres (SPL) dans des directions opposées, puis réunis à nouveau,
- l'image interférentielle alors formée est détectée, et un signal électrique ($U_{det}$) correspondant à l'intensité lumineuse de l'image interférentielle est produit, et dans lequel
- les deux faisceaux lumineux sont modulés par un signal de commande ($u_\varphi$) assemblé à partir de plusieurs composantes variables, dont une première composante de signal est un signal de rampe produit par l'intermédiaire d'un processus de réglage numérique, qui compense des déphasages incrémentaux non réciproques des deux faisceaux lumineux, et dont une seconde composante de signal, commandée par un premier générateur de nombres aléatoires (M), prend respectivement pour un temps $T_0$ les valeurs zéro ou $\pi$, $T_0$ correspondant au temps de propagation de chacun des deux faisceaux lumineux par la bobine de fibres (SPL) à l'état de repos,
caractérisé en ce que
- au signal de commande ($u_\varphi$) est ajoutée une troisième composante de signal qui, commandée par un second générateur de nombres aléatoires (D), prend respectivement pour un temps $T_0$ les valeurs $\pi/2 + d$ ou $\pi/2 - d$, d étant une petite grandeur de test prédéterminée, et que
- le signal de commande assemblé est soumis à un processus d'intégration avec remise à zéro modulo $2\pi$, le signal de remise à zéro aussi bien que les seconde et troisième composantes de signal étant injectés avant le processus d'intégration commun.

**2.** Procédé selon la revendication 1, caractérisé en ce que, après temporisation d'un laps de temps correspondant au temps de parcours du signal par le parcours de signal externe de l'interféromètre, la grandeur de test d est additionnée en tant que grandeur de compensation adaptée au signe, au signal d'image interférentielle ($x_{AD}$) numérisé et démodulé.

**3.** Procédé selon la revendication 2, caractérisé en ce que la composante du signal de test d, présente dans le signal d'addition compensé, et pondérée par un facteur "$(1-a_0c_0)$" est utilisée, après formation de la moyenne et évaluation simultanée avec le signe du signal de test d, comme grandeur de commande pour le réglage de la valeur de consigne momentanée du signal de commande de modulation ($u_\varphi$), $a_0$ étant le gain pour le signal de commande ($u_\varphi$) et $c_0$ étant une constante qui dépend du flux lumineux moyen sur le détecteur d'image interférentielle (D), de la sensibilité de celui-ci et de l'amplifi-cation du signal d'image interférentielle ($U_{det}$).

**4.** Procédé selon la revendication 2, caractérisé en ce que le signal d'addition pondéré par le signal du premier générateur de nombres aléatoires (M) retardé du temps de propagation du signal par le chemin de signal externe de l'interféromètre, est démodulé dans un démodulateur synchrone numérique ($ADD_1$) et sorti, après filtrage numérique ($ADD_2$, $REG_1$) et formation de la moyenne ($MW_3$), comme signal proportionnel à la vitesse de rotation ($y_\Omega$).

**5.** Procédé selon la revendication 4, caractérisé en ce que le signal d'addition ($s_2$) pondéré par le signal retardé du premier générateur de nombres aléatoires (M) est soumis à une formation de la moyenne numérique (MW2), avec pondération simultanée du signe par un bit de report d'une valeur de $2\pi$ obtenu par le processus d'intégration commun à partir de la remise à zéro modulo $2\pi$, et que le résultat de cette formation de la moyenne est utilisé comme grandeur de réglage ($y_{a1}$) pour le gain ($a_1$) du signal d'image interférentielle détecté.

**6.** Dispositif de mesure de vitesse de rotation, comprenant un interféromètre de Sagnac à fibre optique à

EP 0 551 537 B1

remise à zéro de phase, dans lequel
- deux faisceaux lumineux émis par une source de lumière (Em), polarisés au moyen d'un polariseur (P) et produits par un diviseur de rayons (S), sont injectés dans une bobine de fibres (SPL) dans des directions opposées, puis réunis à nouveau sur le diviseur de rayons (S),
- l'image interférentielle formée par réunion des faisceaux est explorée par un photodétecteur (Det) qui fournit un signal ($u_{det}$) correspondant à l'intensité lumineuse de l'image interférentielle et transmis à un premier amplificateur (1) suivi d'un convertisseur AD (2) dont les valeurs de sortie sont traitées dans un circuit d'interprétation numérique (3) qui délivre
-- d'une part le signal de remise à zéro de phase numérique ($y_{DA}$) produit par l'intermédiaire d'un circuit de réglage principal (ADD$_1$, M, V$_1$, ADD$_2$, REG$_1$, ADD$_3$, PI, MW$_3$) sur un convertisseur DA (4) suivi d'un second amplificateur (5) pour l'obtention du signal de remise à zéro ($u_\varphi$) transmis au modulateur de phase (P), et un signal proportionnel à la vitesse de rotation ($y_\Omega$) et,
-- d'autre part, par l'intermédiaire d'un premier circuit de réglage auxiliaire (ADD$_1$, ADD$_2$, REG$_1$, ADD$_3$, PI, V$_3$, MW$_2$), un premier signal de réglage ($y_{a1}$) pour le gain $a_1$ du second amplificateur (5), de façon à satisfaire à la relation de valeur de consigne $a_1 c_1 = 1$, $c_1$ désignant le facteur de couplage électro-optique,
caractérisé en ce que
- le gain $a_0$ du premier amplificateur (1) peut être commandé, et que
- le circuit d'interprétation (3) fournit, par l'intermédiaire d'un second circuit de réglage auxiliaire (ADD$_1$, D, V$_2$, RP$_1$, RP$_2$, MW$_1$), un second signal de réglage ($y_{a0}$) pour le gain ao du premier amplificateur (1), dont la grandeur est un critère pour l'écart du produit "$a_0 c_0$" par rapport à "1", $c_0$ étant une constante qui dépend du flux lumineux moyen sur le photodétecteur (Det), de la sensibilité de celui-ci ainsi que du gain total dans le circuit de réglage principal.

7. Dispositif selon la revendication 6, caractérisé en ce que le circuit de réglage principal comprend les ensembles suivants :
- un premier additionneur (ADD$_1$) qui reçoit, du côté entrée, le signal de sortie ($x_{AD}$) du convertisseur AD (2) ainsi qu'un signal de test de compensation ($d_1$') évalué en signe transmis par l'intermédiaire d'un premier registre d'inversion (RP$_1$) en provenance d'un second générateur de nombres aléatoires (D) en passant par un second temporisateur (V$_2$) qui compense les temps de propagation des signaux, et dont le signal d'entrée ($x_{AD}$) est pondéré en même temps par un signal de signe ($d'_2$) dérivé du premier générateur de nombres aléatoires (M) et transmis, en vue de la compensation des temps de propagation des signaux, par l'intermédiaire d'un premier temporisateur (V$_1$);
- un filtre numérique (ADD$_2$, REG$_2$) recevant le signal de sortie du premier additionneur (ADD$_1$), dont le signal de sortie ($s_3$) correspond au signal de vitesse de rotation sorti par l'intermédiaire d'un troisième formateur de valeur moyenne (ADD$_7$, REG$_5$);
- un étage d'addition-intégration (ADD$_3$, PI) qui reçoit, du côté entrée, le signal de vitesse de rotation ($s_3$) du démodulateur comme première composante de signal, le signal ($d_2$) du premier générateur de nombres aléatoires (M), évalué à 0 ou $\pi$, comme seconde composante de signal, ainsi que, par l'intermédiaire d'un second registre d'inversion (RP$_2$), le signal de test d complété de $\pi/2$ du second générateur de nombres aléatoires (D), comme troisième composante de signal, une remise à zéro modulo $2\pi$ étant réalisée dans l'étage d'intégration.

8. Dispositif selon la revendication 7, caractérisé en ce que le premier circuit de réglage auxiliaire comprend, outre le premier additionneur (ADD$_1$), un second formateur de valeur moyenne (MW$_2$) dans l'étage additionneur (ADD$_6$) duquel est effectuée une pondération du signe du signal de sortie du premier additionneur (ADD$_1$) par le signal de report ($d_3$) provenant de la remise à zéro modulo $2\pi$ dans l'étage d'intégration (PI).

9. Dispositif selon l'une des revendications 7 ou 8, caractérisé en ce que le second circuit de réglage auxiliaire comprend, outre le premier additionneur (ADD$_1$), un premier formateur de valeur moyenne (MW$_1$) dans l'étage additionneur (ADD$_5$) duquel est effectuée une pondération du signe du signal de sortie du premier additionneur (ADD$_1$) par le signal du second générateur de nombres aléatoires (D) temporisé en vue de la compensation des temps de propagation des signaux.

10. Dispositif selon l'une quelconque des revendications 6 à 9, caractérisé en ce que dans un système de mesure de vitesse de rotation à plusieurs axes dans lequel est associé à chaque axe de mesure un système interférométrique individuel, les signaux des photodétecteurs de tous les interféromètres réunis en

15

un seul signal commun pour tous les canaux sont transmis à un seul canal analogique qui comporte seulement un photodétecteur (Det), un amplificateur d'entrée (1) et un convertisseur AD (2) commun.

# Fig. 1

# Fig. 2

Ausgabe-Filter zum Prozessor 7

zum DA-Wandler 4

# Fig. 3